# FASCICULE DE BREVET EUROPEEN

(11) **EP 3 171 075 B1**
(45) Date de publication et mention de la délivrance du brevet: **22.05.2019**
(21) Numéro de dépôt: 16200317.2
(22) Date de dépôt: 23.11.2016
(51) Int. Cl.: F21V 8/00, G02B 27/01

(54) **ÉLÉMENT D'AFFICHEUR ET AFFICHEUR COMPRENANT UN TEL ÉLÉMENT**
ELEMENT EINES ANZEIGEGERÄTS UND ANZEIGEGERÄT, DAS EIN SOLCHES ELEMENT UMFASST
DISPLAY ELEMENT AND DISPLAY COMPRISING SUCH AN ELEMENT

(30) Priorité: 23.11.2015 FR 1561255
(43) Date de publication de la demande: 24.05.2017
(73) Titulaire: Valeo Comfort and Driving Assistance, 94046 Créteil Cedex (FR)
(72) Inventeur: GRANDCLERC, François, 94046 Créteil CEDEX (FR); MERMILLOD, Pierre, 94046 Créteil CEDEX (FR)
(74) Mandataire: Delplanque, Arnaud

(56) Documents cités:
- EP-A1- 0 724 174
- WO-A1-2014/102463
- FR-A1- 2 542 063

## Description

### DOMAINE TECHNIQUE AUQUEL SE RAPPORTE L'INVENTION

La présente invention concerne un élément d'afficheur, utilisé notamment dans un afficheur tête haute pour véhicule automobile.

Elle concerne plus particulièrement un élément d'afficheur comprenant une lame semi-réfléchissante, au moins partiellement transparente pour permettre l'observation d'un environnement à travers la lame, et permettant, par réflexion sur une face de la lame, de visualiser une image à afficher.

L'invention s'applique de manière particulièrement avantageuse dans le cas où l'on souhaite éclairer une partie du contour de cette lame semi-réfléchissante pour rendre lumineuse cette partie du contour de la lame.

L'invention concerne également un afficheur, notamment un afficheur tête haute, comprenant un tel élément d'afficheur.

### ARRIERE-PLAN TECHNOLOGIQUE

Pour le conducteur d'un véhicule automobile, il est particulièrement confortable de pouvoir visualiser des informations supplémentaires, relatives au fonctionnement du véhicule, à l'état du trafic, ou autres, sans avoir pour cela à détourner son regard de la route faisant face au véhicule.

Il est connu dans ce but d'équiper un véhicule automobile avec un afficheur, dit tête haute. Un tel afficheur utilise une réflexion partielle sur un élément situé devant le conducteur, par exemple une lame semi-réfléchissante disposée entre le parebrise du véhicule et les yeux du conducteur, pour projeter une image virtuelle comportant les informations à afficher, de manière à ce qu'elle se superpose visuellement à l'environnement faisant face au véhicule.

Un tel afficheur peut en outre être configuré pour qu'une partie de la tranche de cette lame apparaisse lumineuse au conducteur. Cela fournit un moyen supplémentaire pour émettre des signaux à destination du conducteur. Un signal d'alerte à destination de celui-ci peut par exemple être obtenu en éclairant de manière intermittente le contour de la lame par une lumière de couleur rouge. Eclairer ainsi le contour de cette lame semi-réfléchissante permet aussi de matérialiser clairement la zone dans laquelle apparaissent les informations affichées par cet afficheur tête haute.

Pour qu'une partie de la tranche de cette lame semi-réfléchissante apparaisse lumineuse au conducteur, il est connu de disposer des sources lumineuses en vis-à-vis d'une première partie de cette tranche, pour que le rayonnement lumineux émis par ces sources entre dans la lame semi-réfléchissante, au niveau de cette première partie de la tranche de la lame.

A la manière d'un guide de lumière, la lame semi-réfléchissante guide ensuite ce rayonnement lumineux à l'intérieur de la lame, jusqu'à une deuxième partie de la tranche de la lame, par laquelle ce rayonnement lumineux sort de la lame. Cette deuxième partie de la tranche de la lame émet ainsi de la lumière, et apparaît comme lumineuse au conducteur du véhicule.

On connait notamment du document WO 2015/065490 une unité d'affichage, comprenant une telle lame semi-réfléchissante, montée sur un charriot mobile. Des sources lumineuses, destinées à éclairer une partie de la tranche de cette lame semi-réfléchissante, sont également montées sur ce charriot mobile. Des guides de lumière, également montés sur ce charriot mobile, sont prévus pour amener le rayonnement lumineux émis par ces sources jusqu'à une partie de la tranche de la lame semi-réfléchissante par laquelle ce rayonnement entre dans la lame.

### OBJET DE L'INVENTION

Dans ce contexte, la présente invention propose un élément d'afficheur comprenant une lame semi-réfléchissante formée d'une plaque transparente présentant deux faces principales reliées par une tranche, cette lame permettant la visualisation, par réflexion sur l'une desdites deux faces principales, d'une image à afficher, au moins une source lumineuse, et un support présentant un corps, la lame semi-réfléchissante et ladite au moins une source lumineuse étant montées sur ce corps.

Selon l'invention, ladite au moins une source lumineuse est disposée de manière à émettre un rayonnement lumineux dirigé vers l'intérieur du corps du support, et le corps du support est formé d'un matériau au moins partiellement transparent.

Ainsi, le corps du support transmet une partie au moins du rayonnement lumineux émis par ladite au moins une source lumineuse jusqu'à la lame semi-réfléchissante, ce qui permet de rendre lumineuse une partie de la tranche de cette lame.

Ledit matériau formant le corps du support peut notamment être complètement transparent, non-diffusant optiquement. Ce matériau peut aussi n'être que partiellement transparent.

Par ailleurs, en configurant ainsi le support pour qu'il remplisse à la fois le rôle d'un support et celui d'un guide de lumière, on simplifie avantageusement la structure de ce dispositif de projection par rapport à la structure d'une unité d'affichage utilisant des guides de lumières supplémentaires distincts du support sur lequel ils sont montés. L'assemblage du dispositif de projection selon l'invention en est ainsi avantageusement facilité.

De plus, le montage de la lame semi-réfléchissante et de ladite au moins une source lumineuse directement sur le corps du support, sans pièce intermédiaire supplémentaire pour guider la lumière, rend le dispositif de projection selon l'invention particulièrement robuste, ce qui est intéressant notamment lorsque ce dernier est embarqué dans un véhicule automobile, puisque le dispositif de projection peut alors être soumis à d'importantes vibrations mécaniques.

Il est également proposé que le matériau formant le corps du support soit optiquement diffusant.

La transmission dudit rayonnement lumineux par l'intermédiaire de ce corps en matériau optiquement diffusant permet alors d'améliorer avantageusement l'homogénéité d'éclairage de la tranche de la lame semi-réfléchissante.

Selon d'autres caractéristiques optionnelles, et donc non limitatives :
- la tranche de la lame semi-réfléchissante présente une face d'entrée située contre le corps du support, par laquelle une partie dudit rayonnement lumineux peut entrer dans la lame semi-réfléchissante ;
- le corps du support présente une gorge dans laquelle est enchâssée la lame semi-réfléchissante, la face d'entrée de la tranche de la lame étant située contre le fond de cette gorge ;
- le corps du support est délimité par une surface externe recouverte au moins en partie d'un revêtement opaque ;
- ladite au moins une source lumineuse comprend une diode électroluminescente ;
- la tranche de la lame semi-réfléchissante comprend une première partie formant ladite face d'entrée, et une deuxième partie, configurée pour laisser sortir de la lame semi-réfléchissante une partie au moins dudit rayonnement lumineux, et pour dévier cette partie dudit rayonnement lumineux lorsqu'elle sort de la lame semi-réfléchissante ; et
- la deuxième partie de la tranche de la lame semi-réfléchissante est optiquement diffusante.

L'invention propose également un afficheur comprenant un élément d'afficheur tel que proposé ci-dessus.

Selon une caractéristique optionnelle, et non limitative, cet afficheur comprend en outre un boîtier, ladite lame semi-réfléchissante étant montée mobile par rapport à ce boîtier.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un afficheur tête haute mettant en oeuvre les enseignements de l'invention,
- la figure 2 est une vue schématique en perspective d'un élément d'afficheur de l'afficheur de la figure 1,
- la figure 3 est une autre vue schématique en perspective de l'élément d'afficheur de la figure 2, et
- la figure 4 est une vue schématique de l'élément d'afficheur de la figure 2, selon le plan de coupe A-A représenté figure 3.

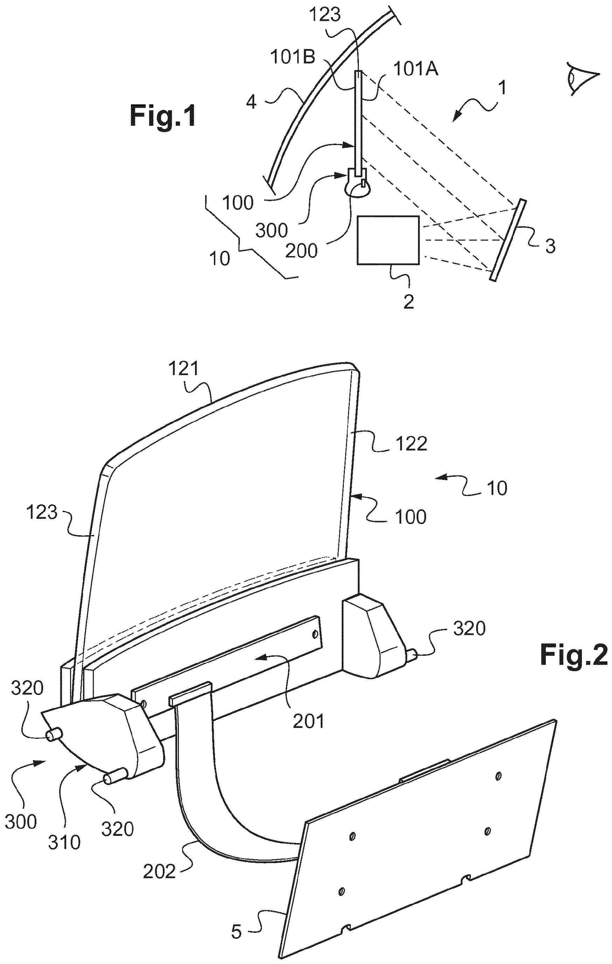

La figure 1 représente schématiquement les composants principaux d'un afficheur 1 tête haute destiné à équiper un véhicule, par exemple un véhicule automobile.

Un tel afficheur 1 comprend un ensemble optique de projection, qui comporte ici une unité de génération d'image 2 et un miroir de renvoi 3 conçus pour projeter une image générée par l'unité de génération d'image 2 dans le champ de vision du conducteur du véhicule, grâce à une lame 100 semi-réfléchissante, également dénommée "*combineur*", placée dans ce champ de vision.

On peut ainsi afficher des informations dans le champ de vision du conducteur sans que celui-ci n'ait à détourner le regard de la route suivie par le véhicule. La lame 100 semi-réfléchissante utilisée à cette fin est ici un élément optique distinct du pare-brise 4 du véhicule, et disposée de préférence entre le pare-brise 4 du véhicule et les yeux du conducteur.

Dans un autre mode de réalisation, la lame semi-réfléchissante permettant d'afficher ces informations dans le champ de vision du conducteur pourrait être constituée par le pare-brise du véhicule, l'ensemble optique de projection utilisant alors directement ce pare-brise pour projeter dans le champ de vision du conducteur l'image générée par l'unité de génération d'image. Ce mode de réalisation s'avère intéressant notamment lorsque le véhicule est une motocyclette, car, dans ce cas, une partie de la tranche du pare-brise est visible, pour le conducteur.

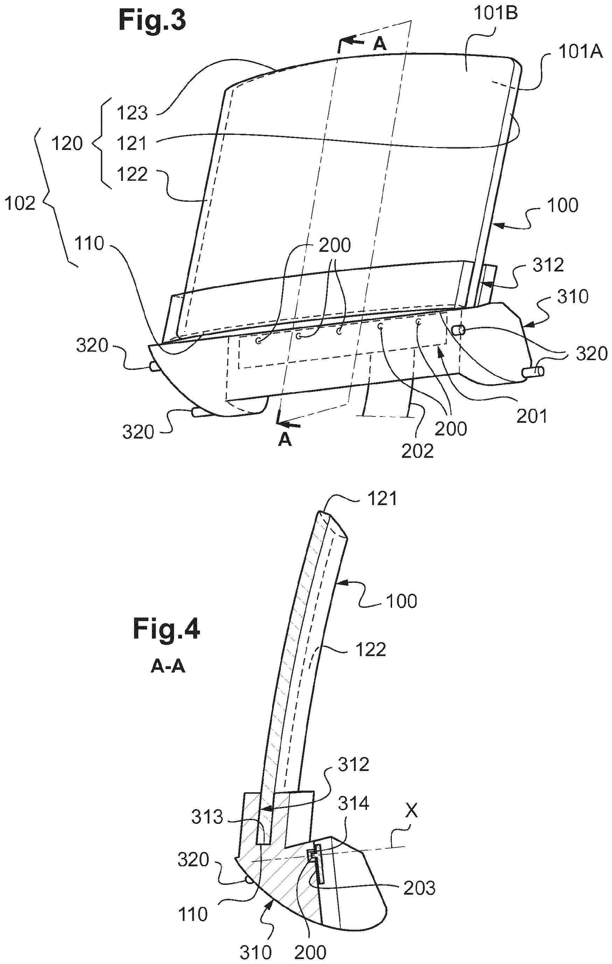

La lame 100 semi-réfléchissante est formée d'une plaque transparente, par exemple en matière plastique ou en verre, plane ou incurvée, présentant deux faces principales 101A, 101B reliées par une tranche 102 (figure 3). Une réflexion partielle sur l'une de ces deux faces principales 101A, 101B, de l'image projetée par l'ensemble optique de projection, permet de superposer visuellement cette image à un environnement situé face au véhicule automobile.

Cet afficheur 1 tête haute comprend également un élément d'afficheur 10 qui comporte, outre la lame 100 semi-réfléchissante susmentionnée :
- au moins une source lumineuse, ici, plus précisément, cinq sources lumineuses 200 (figures 3 et 4), destinées à éclairer la tranche 102 de la lame 100, et
- un support 300 comportant un corps 310 sur lequel la lame 100 semi-réfléchissante et lesdites sources lumineuses 200 sont montées.

La tranche 102 de la lame 100 semi-réfléchissante, c'est-à-dire la surface délimitant latéralement cette lame 100, comprend ici (figure 3) une première partie, formant une face d'entrée 110, par laquelle une partie au moins du rayonnement lumineux émis par ces sources lumineuses 200 entre dans la lame 100.

A la manière d'un guide de lumière, la lame 100 semi-réfléchissante guide alors le rayonnement lumineux qui a pénétré dans la lame 100, jusqu'à une deuxième partie 120 de la tranche 102 de la lame, par laquelle une partie au moins de ce rayonnement sort de la lame. Cette deuxième partie 120 de la tranche de la lame émet ainsi de la lumière, et apparaît comme lumineuse au conducteur du véhicule.

Préférentiellement, cette deuxième partie 120 de la tranche 102 de la lame est configurée pour dévier vers le conducteur du véhicule la partie du rayonnement lumineux qui sort de la lame 100 semi-réfléchissante. Cela permet d'augmenter la luminosité de cette deuxième partie 120 de la tranche 102 de la lame du point de vue du conducteur.

A cette fin, la deuxième partie 120 de la tranche 102 de la lame est ici dépolie, c'est-à-dire grainée, ce qui la rend optiquement diffusante. Ce grainage permet en outre d'éviter que les bords de la lame 100 semi-réfléchissante ne soient coupants.

En variante, des particules diffusantes peuvent être disposées sur cette deuxième partie de la tranche de la lame pour augmenter sa luminosité du point de vue du conducteur.

Selon une autre variante, cette deuxième partie de la tranche de la lame peut être biseautée, pour dévier par réfraction ces faisceaux lumineux vers le conducteur du véhicule lorsqu'ils sortent de la lame.

La lame 100 semi-réfléchissante présente ici un contour ayant globalement la forme d'un rectangle. La face d'entrée 110 de la tranche 102 de la lame correspond à l'un des côtés de ce rectangle, tandis que la deuxième partie 120 de cette tranche 102 correspond aux trois autres côtés de ce rectangle. Ici, la deuxième partie 120 de la tranche 102 comprend ainsi une première, une deuxième et une troisième faces 121, 122, 123, chacune de ces faces correspondant à l'un des côtés du contour rectangulaire de la lame 100.

En variante, le contour de la lame semi-réfléchissante pourrait présenter une autre forme, par exemple hémicirculaire, trapézoïdale, ou encore triangulaire. Dans le cas d'une forme hémicirculaire, par exemple, la face d'entrée de la tranche de la lame pourrait correspondre au bord rectiligne de ce contour hémicirculaire, tandis que la deuxième partie de la tranche de cette lame correspondrait à la partie circulaire de ce contour.

Préférentiellement, la lame 100 semi-réfléchissante est montée sur le corps 310 du support 300 de sorte que la face d'entrée 110 de la tranche 102 de la lame soit située contre le corps 310 du support 300 de l'élément d'afficheur 10.

Pour cela, le corps 310 du support 300 présente ici une gorge 312 dans laquelle est enchâssée la lame 100 semi-réfléchissante, la face d'entrée 110 de la tranche 102 de la lame prenant appui sur le fond 313 de cette gorge 312 (figure 4). Cette gorge 312 s'étend par ailleurs sur une longueur sensiblement égale ou légèrement supérieure à la longueur de cette face d'entrée 110.

Ce mode de montage de la lame 100 semi-réfléchissante sur le corps 310 du support est particulièrement commode : il permet de maintenir fermement la lame 100 sur le support 300, sans qu'il soit nécessaire pour cela à pratiquer des trous de fixation sur la lame 100.

Le corps 310 du support forme ici un bloc massif, d'un seul tenant.

Selon une caractéristique particulièrement remarquable, les sources lumineuses 200 montées sur le corps 310 du support sont disposées de manière à émettre un rayonnement lumineux dirigé vers l'intérieur du corps 310 du support, le corps 310 du support étant formé d'un matériau au moins partiellement transparent.

Le rayonnement lumineux produit par ces sources lumineuses 200 peut ainsi parvenir jusqu'à la face d'entrée 110 de la tranche 102 de la lame 100, sans avoir à utiliser un guide de lumière supplémentaire (distinct du support 300) pour cela, ce qui simplifie avantageusement la structure de cet élément d'afficheur 10.

Préférentiellement, le matériau formant le corps 310 du support 300 est optiquement diffusant. Cela permet d'obtenir un éclairage particulièrement homogène de la face d'entrée 110 de la tranche 102 de la lame. La luminosité présentée par la tranche 102 de lame, sur l'ensemble de ses première, deuxième et troisièmes faces 121, 122, 123 visibles du conducteur est alors elle aussi particulièrement homogène.

Le caractère plus ou moins (optiquement) diffusant du matériau formant le corps 310 du support est ajusté ici de manière à obtenir un compromis optimal entre :
- d'une part, l'homogénéité d'éclairage de la face d'entrée 110 de la tranche 102 de la lame semi-réfléchissante, et
- d'autre part, la puissance lumineuse parvenant jusqu'à cette face d'entrée 110, depuis lesdites sources lumineuses 200.

En effet, le phénomène de diffusion (qui améliore l'homogénéité d'éclairage de la face d'entrée) peut s'accompagner d'une absorption dans le matériau, au détriment de l'intensité lumineuse traversant le corps 310.

En effet, l'éclairage de la face d'entrée 110 de la tranche 102 de la lame semi-réfléchissante est d'autant plus homogène, mais d'autant moins intense, que ce matériau est optiquement diffusant.

Ici, le corps 310 du support est obtenu par moulage d'un mélange de matières plastiques comprenant :
- une première matière plastique transparente, non-diffusante optiquement, et
- une deuxième matière plastique translucide, optiquement diffusante.

Le caractère plus ou moins (optiquement) diffusant du matériau formant le corps 310 du support 300 est alors obtenu en ajustant, dans ce mélange de matières plastiques, les proportions relatives de ces première et deuxième matières plastiques.

En variante, le corps du support pourrait par exemple être obtenu par moulage seulement de cette première matière plastique transparente, non-diffusante optiquement, au lieu d'être obtenu par moulage d'un mélange de ces première et deuxième matières plastiques.

Les sources lumineuses 200 de cet élément d'afficheur 10, ici des diodes électroluminescentes, sont montées fixement sur une plaque-support de circuit imprimé 201 (figures 2 à 4). Cela facilite la manipulation, le montage et le raccordement électrique de ces sources. Plus précisément, les cinq sources lumineuses 200 de l'élément d'afficheur 10 sont disposées ici sur une même face 203 de cette plaque-support de circuit imprimé 201.

Cette plaque-support de circuit imprimé 201 est montée fixement sur le corps 310 du support, de manière à ce que sa face 203 qui porte les sources lumineuses 200 soit plaquée contre le corps 310 du support (figure 4). Un logement 314 est ménagé dans le corps 310 du support, en correspondance de chacune de ces sources lumineuses 200, pour la recevoir.

Les sources lumineuses 200 de l'élément d'afficheur 10 émettent ainsi un rayonnement dirigé vers l'intérieur du corps 310 du support, comme indiqué précédemment.

Ici, le rayonnement lumineux émis par ces sources présente une direction initiale moyenne de propagation X sensiblement parallèle à la face d'entrée 110 de la lame semi-réfléchissante, comme illustré figure 4. Ici, le rayonnement lumineux émis par ces sources lumineuses 200 n'est donc pas dirigé initialement vers cette face d'entrée 110. Mais, grâce au caractère optiquement diffusant du matériau formant le corps 310 du support, une partie de ce rayonnement est dévié (par diffusion) vers la face d'entrée 110 de la lame semi-réfléchissante, et peut ainsi entrer dans la lame 100 semi-réfléchissante.

Comme on le constate sur cet exemple de réalisation, grâce au caractère optiquement diffusant du matériau formant le corps 310 du support 300, il n'est pas indispensable, pour éclairer efficacement la face d'entrée de la lame, que le rayonnement lumineux émis par les sources lumineuses soit dirigé initialement vers cette face d'entrée. Ce caractère optiquement diffusant apporte ainsi beaucoup de liberté dans le positionnement de ces sources lumineuses 200 sur le corps 310 du support de l'élément d'afficheur 10. Grâce à cette liberté de positionnement, on évite des contraintes mécaniques, liées par exemple au montage de l'élément d'afficheur 10 dans l'afficheur 1 ou au raccordement électrique de la plaque-support de circuit imprimé 201.

Ici, la plaque-support de circuit imprimé 201 est montée sur le corps 310 du support de manière à s'étendre le long de celui-ci, sensiblement perpendiculairement au fond 313 de la gorge 312 dans laquelle est enchâssée la lame 100 (figure 4).

En variante, cette plaque-support de circuit imprimé pourrait positionnées différemment sur le corps du support, par exemple à l'opposé du fond de la gorge, par rapport au corps du support, en vis-à-vis du fond de la gorge (afin de positionner les sources lumineuses en vis-à-vis de la face d'entrée de la tranche de la lame).

Le corps 310 du support est délimité par une surface externe, qui est recouverte ici d'un revêtement opaque, tel qu'une couche de peinture noire. Cette surface externe est recouverte intégralement par ce revêtement opaque, sauf :
- en vis-à-vis de la face d'entrée 110 de la tranche 102 de la lame semi-réfléchissante, c'est-à-dire ici au niveau du fond 313 de la gorge 312, et
- en vis-à-vis des sources lumineuses 200 de l'élément d'afficheur 10, c'est-à-dire ici au niveau des logements 314 du corps du support qui reçoivent ces sources lumineuses 200.

Grâce à ce revêtement opaque, le rayonnement lumineux émis par ces sources lumineuses 200 ne peut essentiellement sortir du corps 310 du support qu'au niveau de la face d'entrée 110 de la lame semi-réfléchissante.

On évite ainsi des fuites de lumière, qui pourraient s'avérer gênantes pour le conducteur du véhicule, en particulier de nuit. Autrement formulé, grâce à ce revêtement opaque, le rayonnement lumineux émis par les sources lumineuses 200 de l'élément d'afficheur 10 sort de celui-ci principalement par la tranche 102 de la lame 100 semi-réfléchissante.

Ici, l'afficheur 1 comprend en outre un boîtier (non représenté). L'élément d'afficheur 10 est monté mobile dans ce boîtier. Plus précisément, l'élément d'afficheur 10 est mobile entre une position déployée, dans laquelle la lame 100 semi-réfléchissante s'étend en saillie à l'extérieur du boîtier, et une position rétractée dans laquelle la lame 100 est logée dans ce boîtier.

Le corps 310 du support 300 de l'élément d'afficheur 10 est pourvu ici de plots de guidage 320, configurés pour coopérer avec des rails de guidage du boitier de manière à guider le déplacement de l'élément d'afficheur 10 entre sa position déployée et sa position rétractée.

L'alimentation électrique des sources lumineuses 200 de l'élément d'afficheur 10 est assurée par un câble électrique 202 reliant la plaque-support de circuit imprimé 201 de l'élément d'afficheur 10 à une autre plaque-support de circuit imprimé 5 solidaire du boîtier de l'afficheur 1.

Ce câble électrique 202 est flexible pour autoriser le mouvement de l'élément d'afficheur 10 entre sa position déployée et sa position rétractée. Il est par exemple composé de plusieurs fils électriques disposés côte-à-côte les uns des autres pour former un ruban flexible.

## Revendications

1. Elément d'afficheur (10) comprenant :
- une lame (100) semi-réfléchissante formée d'une plaque transparente présentant deux faces principales (101A, 101B) reliées par une tranche (102), cette lame permettant la visualisation, par réflexion sur l'une desdites deux faces principales, d'une image à afficher,
- au moins une source lumineuse (200), et
- un support (300) présentant un corps (310), la lame (100) semi-réfléchissante et ladite au moins une source lumineuse (200) étant montées sur ce corps (310),
**caractérisé en ce que** ladite au moins une source lumineuse (200) est disposée de manière à émettre un rayonnement lumineux dirigé vers l'intérieur du corps (310) du support, et **en ce que** le corps du support est formé d'un matériau au moins partiellement transparent.

2. Elément d'afficheur (10) selon la revendication 1, dans lequel le matériau formant le corps (310) du support est optiquement diffusant.

3. Elément d'afficheur (10) selon l'une des revendications 1 et 2, dans lequel la tranche (102) de la lame semi-réfléchissante présente une face d'entrée (110) située contre le corps (310) du support, par laquelle une partie dudit rayonnement lumineux peut entrer dans la lame (100) semi-réfléchissante.

4. Elément d'afficheur (10) selon l'une des revendications 1 à 3, dans lequel le corps (310) du support présente une gorge (312) dans laquelle est enchâssée la lame (100) semi-réfléchissante, la face d'entrée (110) de la tranche (102) de la lame étant située contre le fond (313) de cette gorge (312).

5. Elément d'afficheur (10) selon l'une des revendications 1 à 4, dans lequel le corps (310) du support est délimité par une surface externe recouverte au moins en partie d'un revêtement opaque.

6. Elément d'afficheur (10) selon l'une des revendications 1 à 5, dans lequel ladite au moins une source lumineuse (200) comprend une diode électroluminescente.

7. Elément d'afficheur (10) selon l'une des revendications 1 à 6, dans lequel la tranche (102) de la lame semi-réfléchissante comprend une première partie formant ladite face d'entrée (110), et une deuxième partie (120), configurée pour laisser sortir de la lame (100) semi-réfléchissante une partie au moins dudit rayonnement lumineux, et pour dévier cette partie dudit rayonnement lumineux lorsqu'elle sort de la lame semi-réfléchissante.

8. Elément d'afficheur (10) selon la revendication 7, dans lequel la deuxième partie (120) de la tranche (102) de la lame semi-réfléchissante est optiquement diffusante.

9. Afficheur (1) comprenant un élément d'afficheur (10) selon l'une des revendications 1 à 8.

10. Afficheur (1) selon la revendication 9, comprenant en outre un boîtier, ladite lame (100) semi-réfléchissante étant montée mobile par rapport à ce boîtier.

## Patentansprüche

1. Element eines Anzeigegeräts (10), umfassend:
- eine von einer durchsichtigen Platte gebildete halbreflektierende Scheibe (100), die zwei Hauptseiten (101A, 101B) aufweist, die durch eine Schmalseite (102) miteinander verbunden sind, wobei diese Scheibe die Visualisierung eines anzuzeigenden Bildes durch Reflexion auf einer der zwei Hauptseiten ermöglicht,
- wenigstens eine Lichtquelle (200) und
- eine Halterung (300), die einen Körper (310) aufweist, wobei die halbreflektierende Scheibe (100) und die wenigstens eine Lichtquelle (200) auf diesem Körper (310) angebracht sind,
**dadurch gekennzeichnet, dass** die wenigstens eine Lichtquelle (200) derart angeordnet ist, dass sie eine Lichtstrahlung aussendet, die zum Inneren des Körpers (310) der Haltung hin gerichtet ist, und dadurch, dass der Körper der Halterung aus einem Material ausgebildet ist, das wenigstens teilweise durchsichtig ist.

2. Element eines Anzeigegeräts (10) nach Anspruch 1, wobei das Material, welches den Körper (310) der Halterung bildet, lichtstreuend ist.

3. Element eines Anzeigegeräts (10) nach einem der Ansprüche 1 und 2, wobei die Schmalseite (102) der halbreflektierenden Scheibe eine Eintrittsseite (110) aufweist, die am Körper (310) der Halterung anlegend angeordnet ist und über welche ein Teil der Lichtstrahlung in die halbreflektierende Scheibe (100) eintreten kann.

4. Element eines Anzeigegeräts (10) nach einem der Ansprüche 1 bis 3, wobei der Körper (310) der Halterung eine Rinne (312) aufweist, in welche die halbreflektierende Scheibe (100) eingelassen ist, wobei die Eintrittsseite (110) der Schmalseite (102) der Scheibe am Boden (313) dieser Rinne (312) anliegend angeordnet ist.

5. Element eines Anzeigegeräts (10) nach einem der Ansprüche 1 bis 4, wobei der Körper (310) der Halterung von einer Außenfläche begrenzt wird, die wenigstens teilweise von einem undurchsichtigen Überzug bedeckt ist.

6. Element eines Anzeigegeräts (10) nach einem der Ansprüche 1 bis 5, wobei die wenigstens eine Lichtquelle (200) eine Leuchtdiode umfasst.

7. Element eines Anzeigegeräts (10) nach einem der Ansprüche 1 bis 6, wobei die Schmalseite (102) der halbreflektierenden Scheibe einen ersten Teil, der die Eintrittsseite (110) bildet, und einen zweiten Teil (120), der dafür ausgelegt ist, wenigstens einen Teil der Lichtstrahlung aus der halbreflektierenden Scheibe (100) austreten zu lassen und diesen Teil der Lichtstrahlung abzulenken, wenn er aus der halbreflektierenden Scheibe austritt, umfasst.

8. Element eines Anzeigegeräts (10) nach Anspruch 7, wobei der zweite Teil (120) der Schmalseite (102) der halbreflektierenden Scheibe lichtstreuend ist.

9. Anzeigegerät (1), welches ein Element eines Anzeigegeräts (10) nach einem der Ansprüche 1 bis 8 umfasst.

10. Anzeigegerät (1) nach Anspruch 9, welches außerdem ein Gehäuse umfasst, wobei die halbreflektierenden Scheibe (100) in Bezug auf dieses Gehäuse beweglich angebracht ist.

## Claims

1. Display element (10) comprising:
- a semi-reflecting panel (100) formed by a transparent plate having two principal faces (101A, 101B) connected by a leaf (102), this panel allowing the display, by reflection on one of said two principal faces, of an image to be displayed,
- at least one light source (200), and
- a support (300) having a body (310), the semi-reflecting panel (100) and said at least one light source (200) being mounted on this body (310),
**characterized in that** said at least one light source (200) is arranged such as to emit rays of light directed towards the interior of the body (310) of the support, and **in that** the body of the support is formed from an at least partially transparent material.

2. Display element (10) according to Claim 1, wherein the material forming the body (310) of the support is optically diffusing.

3. Display element (10) according to one of Claims 1 and 2, wherein the leaf (102) of the semi-reflecting panel has an entry face (110) located against the body (310) of the support, via which a portion of said rays of light can enter the semi-reflecting panel (100).

4. Display element (10) according to one of Claims 1 to 3, wherein the body (310) of the support has a groove (312) in which the semi-reflecting panel (100) is inserted, the entry face (110) of the leaf (102) of the panel being located against the bottom (313) of this groove (312).

5. Display element (10) according to one of Claims 1 to 4, wherein the body (310) of the support is delimited by an external surface covered at least in part by an opaque coating.

6. Display element (10) according to one of Claims 1 to 5, wherein said at least one light source (200) comprises an electroluminescent diode.

7. Display element (10) according to one of Claims 1 to 6, wherein the leaf (102) of the semi-reflecting panel comprises a first part forming said entry face (110) and a second part (120) configured in order to allow a portion at least of said rays of light to exit the semi-reflecting panel (100) and in order to deflect this portion of said rays of light when it exits the semi-reflecting panel.

8. Display element (10) according to Claim 7, wherein the second part (120) of the leaf (102) of the semi-reflecting panel is optically diffusing.

9. Display (1) comprising a display element (10) according to one of Claims 1 to 8.

10. Display (1) according to Claim 9, further comprising a housing, said semi-reflecting panel (100) being mounted so as to move relative to this housing.
